Europäisches Patentamt

European Patent Office

Office européen des brevets

(19)

(11) Publication number: **0 038 522**
**B1**

(12) **EUROPEAN PATENT SPECIFICATION**

(45) Date of publication of patent specification: **12.10.83**

(51) Int. Cl.³: **G 03 B 27/64, B 65 H 17/32**

(21) Application number: **81102869.5**

(22) Date of filing: **15.04.81**

(54) Vacuum document feeder.

(30) Priority: **21.04.80 US 142534**

(43) Date of publication of application:
**28.10.81 Bulletin 81/43**

(45) Publication of the grant of the patent:
**12.10.83 Bulletin 83/41**

(84) Designated Contracting States:
**DE FR GB NL**

(56) References cited:
**GB - A - 1 370 798**
**GB - A - 1 399 125**
**GB - A - 1 566 135**
**US - A - 3 288 462**
**US - A - 3 451 754**
**US - A - 4 212 533**

(73) Proprietor: **EASTMAN KODAK COMPANY**
**Patent Department 343 State Street**
**Rochester, New York 14650 (US)**

(72) Inventor: **Ahern, Douglas King**
**901 Elmgrove Road**
**Rochester New York (US)**
Inventor: **Cleaveland, Edwin Elisha, III**
**901 Elmgrove Road**
**Rochester New York (US)**

(74) Representative: **Lewandowsky, Klaus et al,**
**Kodak Aktiengesellschaft Patentabteilung**
**Postfach 369**
**D-7000 Stuttgart 60 (DE)**

# Vacuum document feeder

This invention relates generally to a document feeder for transporting a document page to an exposure platen of a reproduction apparatus for copying including a vacuum plenum defined, in part, by a wall in which a plurality of spaced ports are formed, and the wall being arranged opposite the exposure platen, and a document page transport belt movable along the plenum wall in a direction to feed a document page to the platen for copying, and the belt having a plurality of spaced ports formed therein.

In order to efficiently utilize commercially available high-speed reproduction apparatus, such as electrophotographic copier/duplicators, document pages to be copied are automatically transported seriatim to and from the exposure station of the apparatus. One typical mechanism is a vacuum document feeder, such as that shown, for example, in U.S. Patent No. 4,043,665, issued August 23, 1977 in the name of Caldwell. Such a feeder employs an endless ported belt supported to traverse a path overlying the exposure station of the reproduction apparatus. A vacuum plenum associated with the belt tacks a document page to the belt for transport across the exposure station.

Some vacuum document feeders may cause undesirable artifacts to be produced in the copies of the document pages. These artifacts are caused by trapping of light during exposure of the document page at the exposure station. Light trapping frequently occurs when ports in the transport belt are superpositioned in the ports in the vacuum plenum. During exposure light passes through the belt and plenum ports when the document page does not fully cover the exposed belt area, or when the page is thin enough to transmit light (e.g., 16-pound paper). Light passing through the plenum ports is trapped within the plenum. The superimposed belt and plenum ports thus appear as dark spots, or shadows, in the reflected light image and are reproduced in the copies as undesirable artifacts.

Several means for reducing or eliminating the production of artifacts have been tried. For example, the transport belts may be formed of material such as porous foam or cloth, having vacuum apertures which do not extend directly from the front surface to the back surface of the belt. However, such materials typically do not have desirable wear characteristics, or are subject to clogging of the apertures, for example by paper and dust particles. Another means for reducing light trapping is shown in U.S. Patent No. 4,047,812, issued September 13, 1977, in the name of Hogan. The perforated transport belt in that patent has endless parallel imperforate bands. These bands lie in the areas corresponding to the top and bottom marginal edges of certain standard size document pages transported by the belt. Since the imperforate bands form a continuous reflective surface adjacent to such marginal edges, artifacts are reduced in the corresponding areas of the copies. However, artifacts may still be produced in the other areas of the copy (i.e., in the areas along the longitudinal opposed marginal edges, or in the case of thin document pages, within the body of the copy).

U.S. Patent No. 3,451,754 discloses a document transport system using a perforated transport belt running over an apertured wall of a plenum chamber. Grooves are formed in such wall for fluidically interconnecting the wall and belt ports during movement of the belt so that the vacuum is effective to tack a document to the belt through an exposure position. But, during movement of the belt over the apertured wall, the perforations in the belt periodically become aligned with the apertures in the wall and thus give rise to the artifacts mentioned above.

The invention as claimed is intended to prevent undesirable artifacts in the copies. This problem is solved by a document feeder of the invention which is characterized in that the ports in the wall and belt are arranged so as not to overlap during movement of the belt along the wall, and in that means are provided for fluidically interconnecting the wall ports and the belt ports during movement of the belt so that a vacuum within the plenum is effective to tack a document page to the belt for movement therewith to the exposure platen and in that the reflectivity of the belt is essentially the same as that of the wall.

The invention, and its objects and advantages, will become more apparent from the detailed description of the preferred embodiment presented below.

In the detailed description of the preferred embodiment of the invention presented below, reference is made to the accompanying drawings, in which:

Figure 1 is a side elevational view, partly in section, of a vacuum document feeder according to this invention;

Figure 2 is a bottom plan view of the vacuum document feeder of Figure 1 with a portion broken away to facilitate viewing; and

Figure 3 is a cross-sectional view on an enlarged scale of a portion of the vacuum document feeder taken on lines 3—3 of Figure 2 with a portion broken away to facilitate viewing.

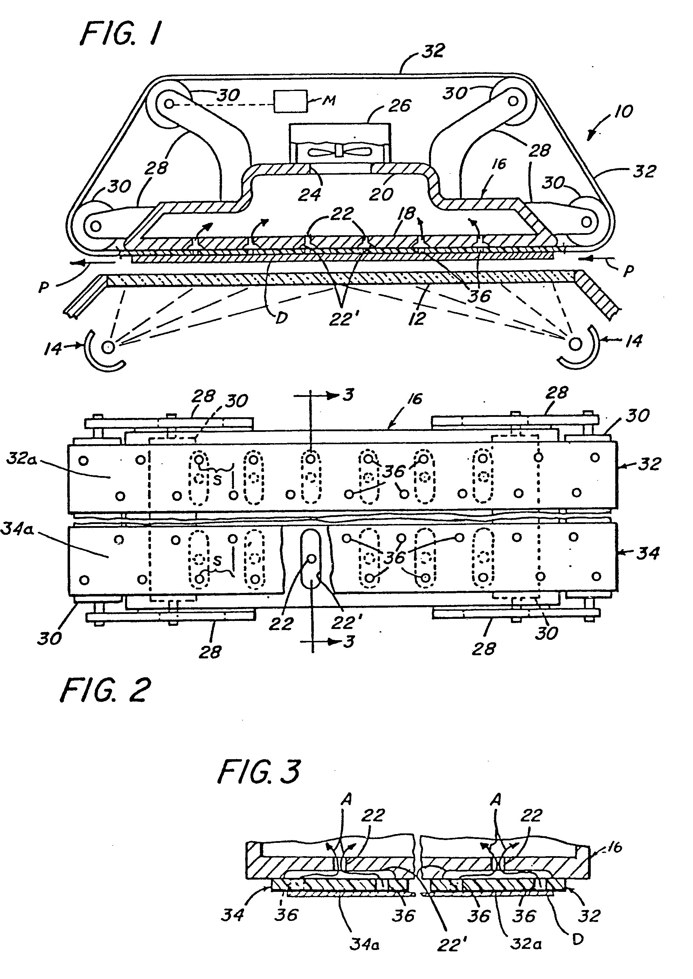

Referring now to the drawings, Fig. 1 shows a vacuum document feeder 10 for transporting document pages (e.g., document page D) seriatim along a path in the direction of arrows P. The feeder is associated with a reproduction apparatus having a transparent platen 12 and exposure lamps 14 (shown schematically) for illuminating a document page overlying the platen to obtain a reflected light image of such page. The reproduction apparatus *per se* may be of any conventional type, such as an electrophotographic copier (see, for example U.S. Patent No. 3,914,047 issued October 21, 1975 in the names of Hunt, Jr. et al). Since the reproduction apparatus requires substantially no modification in order to be used with feeder 10, its details are not shown or described other than relative to the platen and lamps.

The feeder 10 includes a vacuum plenum 16 located adjacent to the platen 12. The dimension of the plenum in the direction transverse to the path direction P is such that the plenum covers substantially the entire platen in such direction. Accordingly, to facilitate viewing, a portion of the plenum has been broken away in Figs. 2 and 3. The plenum 16 comprises a vacuum chamber having first and second walls 18 and 20. The first wall 18 faces the platen 12 and has a series of ports 22 extending through such wall. The ports 22 are aligned in parallel rows (see Fig. 2) extending in the direction P of the page travel path. A plurality of shallow concave grooves 22' are formed in the surface of the wall 18 facing the platen. The plurality of grooves 22' intersect the plurality of ports 22 respectively and are oriented substantially transversely with respect to the direction of the travel path. The surface of the wall 18 facing the platen 12 and the surface of the grooves 22' are light reflective (specular or nonspecular).

The second wall 20 has a large opening 24, and supports a vacuum blower 26 adjacent to such opening. The vacuum blower tends to evacuate the plenum chamber and draws air through the ports 22 (designated by arrows A in Fig. 3). The wall 20 also supports a plurality of brackets 28 which, in turn, carry support rollers 30. The rollers 30 support transport belts 32, 34 and define a course for such belts which has one run in juxtaposition with the groove surface of the wall 18. One of the rollers 30 is driven by a motor M to cause the belts to traverse the defined course. The transport belts 32, 34, which may be formed of a light reflective (specular or nonspecular) polyethylene terephthalate web, include an area having a series of ports 36 (see Fig. 2) aligned in parallel spaced endless rows and a non-ported intermediate area 32a, 34a.

The transport belts 32, 34 are positioned on the rollers 30 so that as the belts are moved about their course, the ports 36 are maintained in spaced relation to the plenum ports 22. That is, the belt ports 36 traverse the grooves 22', and the ports 22 are optically masked by the solid (non-ported) intermediate area 32a, 34a of the belts. The belts are substantially wider than the dimension of the grooves in the direction transverse to the path. The spacing S between successive belt ports 36 is such that any one groove is fluidically interconnected with at least one of the belt ports at all times. Accordingly, air flow through ports 22 and grooves 22' is effective through belt ports 36 passing over the grooves to tack a document page (example D in Figs. 1 and 3) to the belts 32, 34. The belts thus carry the page to the platen 12 where it can be illuminated by lamps 14 to obtain a reflected light image, such image being used by the reproduction apparatus to make copies of the page in a conventional manner.

It is, of course, clear that while two transport belts have been shown, any number of belts may be similarly employed, including a single belt. However many belts there are, the belts (belt) must be selected to have a non-ported area covering the plenum ports and a ported area covering the plenum ports and a ported area traversing the grooves associated with the plenum ports as the belts are driven about their course. The broken away portion of the plenum of Figs. 2 and 3 may or may not include rows of ports and associated grooves depending upon the belt configuration. Further, while the grooves have been described as being in the plenum wall, the grooves could be formed in the belts and associated with the belt ports to fluidically interconnect the belt ports and the plenum wall ports.

If the document page does not fully cover the area of the transport belts illuminated by the lamps 14 during document page exposure, light is reflected from the area of the belts surrounding such page. Any light entering a port in the belt is also reflected since it strikes the reflective plenum wall 18 or shallow concave groove 22' behind such port. The belts, plenum wall and grooves 22' thus form a reflecting surface which prevents light trapping (and resultant undesirable artifacts appearing on the copies). On the other hand, if the page is thin enough to transmit light, such transmitted light is reflected off the belts, plenum wall and grooves 22' behind the ports 36 in the belts, in a similar manner, to prevent any trapping of such transmitted light. Thus undesirable artifacts are substantially reduced.

## Claims

1. Document feeder for transporting a document page to an exposure platen of a reproduction apparatus for copying including a vacuum plenum defined, in part, by a wall in which a plurality of spaced ports are formed, and the wall being arranged opposite the exposure platen, and a document page transport belt movable along the plenum wall in a direction to feed a document page to the platen for copying, the belt having a plurality of spaced ports formed therein and having a reflectivity, characterized in that the ports (22 and 36) in the wall (18) and the belt (32; 34) are arranged so as not to overlap during movement of the belt along the wall, and in that means are provided for fluidically interconnecting the wall ports (22) and belt ports (36) during movement of the belt so that a vacuum within the plenum (16) is effective to tack a document page (D) to the belt (32; 34) for movement therewith to the exposure platen (12) and in that the reflectivity of the belt is essentially the same as that of the wall.

2. Document feeder as claimed in claim 1, characterized in that the interconnecting means comprises a plurality of shallow concave grooves (22') formed in the plenum wall (18), and that the grooves (22') are in fluid communication with the plurality of ports (22) in the wall (18).

3. Document feeder as claimed in claim 2, characterized in that the shallow concave grooves (22') extend substantially transversely with respect to the direction of movement of the belt (32, 34), and that the spacing (S) between successive belt ports (36) is such that any one groove (22') is fluidically interconnected with at least one of the belt ports (36) at all times.

4. Document feeder as claimed in claim 2 or 3, characterized in that the reflectivity of the grooves is essentially the same as that of the belt and of the wall.

**Patentansprüche**

1. Fördereinrichtung, mittels der ein zu kopierendes Vorlagenblatt in einem Kopier- oder Vervielfältigungsgerät zur Belichtung auf eine Vorlagenbühne transportierbar ist, mit einer Vakuumkammer, die teilweise durch eine mehrere im Abstand voneinander angeordnete Öffnungen aufweisende Wand begrenzt wird, die sich gegenüber der Vorlagenbühne befindet, und mit einem Transportband für die Vorlage, das an der Vakuumkammerwand in einer Richtung vorbeibewegbar ist, in der der Vorlagenbühne ein Vorlagenblatt zum Kopieren zugeführt werden kann, wobei das Transportband eine Vielzahl im Abstand voneinander angeordneter Öffnungen aufweist und Reflexionseigenschaften besitzt, dadurch gekennzeichnet, daß die Öffnungen (22 bzw. 36) der Wand (18) und des Transportbandes (32; 34) in der Weise angeordnet sind, daß sie sich beim Vorbeibewegen des Transportbandes an der Wand nicht überlappen, und daß Mittel vorgesehen sind, welche die Wandöffnungen (22) und die Transportbandöffnungen (36) während der Bewegung des Transportbandes strömungsmäßig so miteinander verbinden, daß ein in der Kammer (16) vorhandenes Vakuum das Anhaften eines Vorlagenblatts (D) an dem Transportband (32; 34) bewirkt, derart, daß dieses zur Vorlagenbühne (12) mitbewegt wird, und daß das Transportband im wesentlichen die gleichen Reflexionseigenschaften besitzt wie die Wand.

2. Fördereinrichtung nach Anspruch 1, dadurch gekennzeichnet, daß die Verbindungsmittel eine Vielzahl in der Wand (18) ausgebildeter flacher, konkaver Rillen (22') umfassen und daß die Rillen (22') mit der Vielzahl der in der Wand (18) vorgesehenen Öffnungen (22) in Strömungsverbindung stehen.

3. Fördereinrichtung nach Anspruch 2, dadurch gekennzeichnet, daß die flachen, konkaven Rillen (22') im wesentlichen quer zur Bewegungsrichtung des Transportbandes (32; 34) verlaufen und daß der Abstand zwischen aufeinanderfolgenden Transportbandöffnungen (36) jeweils so gewählt ist, daß immer irgendeine der Rillen (22') mit mindestens einer der Transportbandöffnungen (36) in Strömungsverbindung steht.

4. Fördereinrichtung nach Anspruch 2 oder 3, dadurch gekennzeichnet, daß die Rillen im wesentlichen die gleichen Reflexionseigenschaften besitzen wie das Transportband und die Wand.

**Revendications**

1. Appareil d'alimentation en documents pour transporter une page de document sur une platine d'exposition d'un appareil de reproduction pour la copie, comprenant une chambre à vide partiellement limitée par une paroi percée d'orifices espacés, cette paroi étant placée en regard de la platine, et une courroie d'entraînement d'une page de document, mobile sur cette paroi dans un sens convenant à la mise en place d'une page de document sur la platine pour sa reproduction, la courroie étant percée d'un ensemble de trous espacés et cette courroie présentant un degré de réflexion, caractérisé en ce que les orifices et trous (22 et 36) formés dans la paroi (18) et dans la courroie (32; 34) sont agencées de manière à ne pas se recouvrir au cours du déplacement de la courroie sur la paroi, et en ce que des moyens sont prévus qui établissent une communication, pour un fluide, entre les orifices (22) de la paroi et les trous (36) de la courroie pendant le déplacement de la courroie de manière qu'un vide établi dans la chambre (16) plaque efficacement une page de document (D) contre la courroie (32; 34) qui l'entraîne avec elle verse la platine d'exposition (12) et en ce que le degré de réflexion de la courroie est sensiblement le même que celui de la paroi.

2. Appareil d'alimentation en documents conforme à la revendication 1, caractérisé en ce que les moyens de communication comprennent plusieurs gouttières concaves peu profondes (22') formées dans la paroi (18) et en ce que la communication pour le fluide est établie entre ces gouttières (22') et l'ensemble des orifices (22) de la paroi (18).

3. Appareil d'alimentation en documents conforme à la revendication 2, caractérisé en ce que les gouttières concaves peu profondes (22') s'étendent pratiquement transversalement à la direction du mouvement de la courroie (32, 34), et en ce que l'écartement (5) de deux trous successifs (36) de la courroie est tel que la communication de chaque gouttière (22') pour un fluide est constamment établie avec au moins un des trous (36) de la courroie.

4. Appareil d'alimentation en documents conforme à la revendication 2 ou 3, caractérisé en ce que le degré de réflexion des gouttières est pratiquement le même que celui de la courroie et de la paroi.

0 038 522

FIG. 1

FIG. 2

FIG. 3

1